(19) Europäisches Patentamt
European Patent Office
Office européen des brevets

(11) Veröffentlichungsnummer: **0 050 859**
**A1**

# (12) EUROPÄISCHE PATENTANMELDUNG

(21) Anmeldenummer: 81108803.8

(22) Anmeldetag: 23.10.81

(51) Int. Cl.³: C 07 C 69/74
C 07 C 69/753, C 07 C 69/614
C 07 C 69/63, A 01 N 53/00

(30) Priorität: 28.10.80 DE 3040488

(43) Veröffentlichungstag der Anmeldung:
05.05.82 Patentblatt 82/18

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt/Main 80(DE)

(72) Erfinder: Welter, Wolfgang, Dr.
Gagernring 3
D-6233 Kelkheim (Taunus)(DE)

(72) Erfinder: Mildenberger, Hilmar, Dr.
Fasanenstrasse 24
D-6233 Kelkheim (Taunus)(DE)

(72) Erfinder: Knauf, Werner, Dr.
Im Kirschgarten 24
D-6239 Eppstein/Taunus(DE)

(72) Erfinder: Waltersdorfer, Anna, Dr.
Rauenthaler Weg 28
D-6000 Frankfurt am Main 71(DE)

(72) Erfinder: Bonin, Werner, Dr.
Im Schulzehnten 18
D-6233 Kelkheim (Taunus)(DE)

## (54) Phenoxyphenylpropenyloxycarbonylverbindungen, Verfahren zu ihrer Herstellung und ihre Verwendung als Insektizide und Akarizide.

(57) Verbindungen der Formel

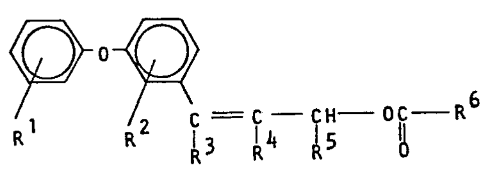

worin $R^1$ H, Halogen, Alkyl oder $CF_3$, $R^2$ H, Halogen, Alkyl oder $CF_3$, $R^3$ H, Halogen, CN oder Alkyl, $R^4$ H, Halogen, Alkyl, Phenyl oder Halogenphenyl, $R^5$ H, Alkyl, Alkinyl oder CN und $R^6$ substituierte Dimethyl-cyclopropyl- oder 2-Phenyl-isobutylreste bedeuten, sind wirksame Insektizide und Akarizide vom Pyrethroid-Typ.

EP 0 050 859 A1

Croydon Printing Company Ltd

0050859

HOECHST AKTIENGESELLSCHAFT HOE 80/F 243 Dr.TG/sch

# Phenoxyphenylpropenyloxycarbonylverbindungen, Verfahren zu ihrer Herstellung und ihre Verwendung als Insektizide und Akarizide

Es ist bereits bekannt, daß Phenylpropenyloxyverbindungen von halogensubstituierten Vinylcyclopropancarbonsäuren insektizide Eigenschaften besitzen (vergl. DOS 26 47 366 und DOS 29 25 315).

Gegenstand der vorliegenden Erfindung sind neue substituierte Phenoxyphenylpropenyloxycarbonylverbindungen der Formel

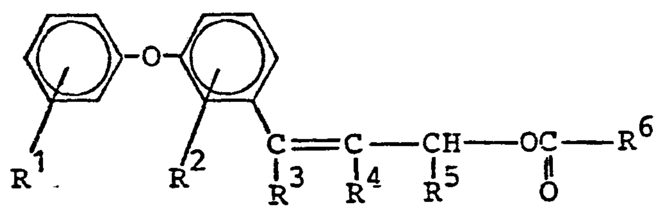

(I)

in welcher

$R^1$ Wasserstoff, Halogen, $(C_1-C_4)$Alkyl oder $(C_1-C_4)$Alkoxy,

$R^2$ Wasserstoff, Halogen, $(C_1-C_4)$Alkyl oder Trifluormethyl,

$R^3$ Wasserstoff, Halogen, Cyan oder $(C_1-C_4)$Alkyl,

$R^4$ Wasserstoff, Halogen, $(C_1-C_4)$Alkyl, Phenyl oder Halogenphenyl,

$R^5$ Wasserstoff, $(C_1-C_4)$Alkyl, $(C_2-C_3)$Alkinyl oder Cyan,

$R^6$ einen Rest der Formel

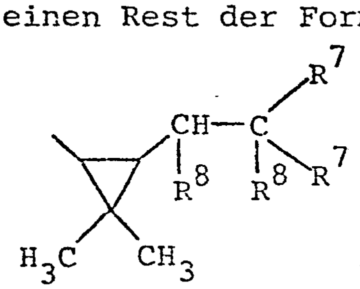

,

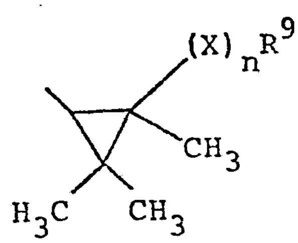

,

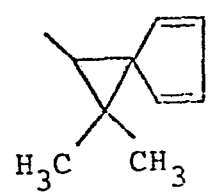

,

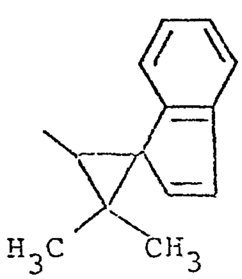

oder

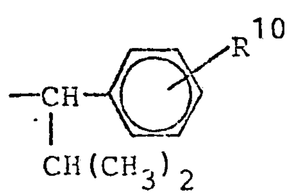

,

$R^7$ Halogen, $(C_1-C_4)$Alkyl, Phenyl oder Halogenphenyl,
$R^8$ Halogen oder beide $R^8$ zusammen eine weitere chemische Bindung,
$R^9$ $(C_1-C_4)$Alkyl, Phenyl oder Halogenphenyl,
$R^{10}$ Wasserstoff, Halogen, $(C_1-C_4)$Alkyl, $(C_1-C_4)$Alkoxy, $(C_1-C_4)$Alkylthio, Halogen-$(C_1-C_4)$alkoxy, Halogen-$(C_1-C_4)$-alkylthio oder Methylendioxy,
X Sauerstoff oder Schwefel sowie
n 0 oder 1 bedeuten.

Die allgemeine Formel (I) schließt dabei die verschiedenen optischen und geometrischen Isomeren der Verbindungen und deren Gemische ein.

In den obigen Definitionen bedeutet "Halogen" vorzugsweise Br und Cl, im Falle der Reste $R_1$, $R_2$ und $R_{10}$ auch F.

Die neuen Verbindungen der Formel (I) zeichnen sich durch eine starke insektizide und akarizide Wirksamkeit aus.

Man erhält die Verbindungen der Formel (I), indem man
a) Carbonsäuren der Formel $R^6$-COOH (II) oder deren reaktionsfähige funktionelle Derivate mit Alkoholen der Formel

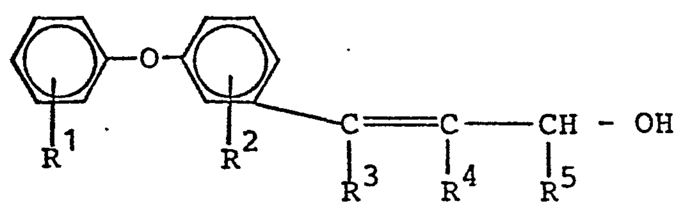

(III)

oder
b) Carbonsäurehalogenide der Formel $R^6$-CO-Hal (IV) mit Aldehyden der Formel

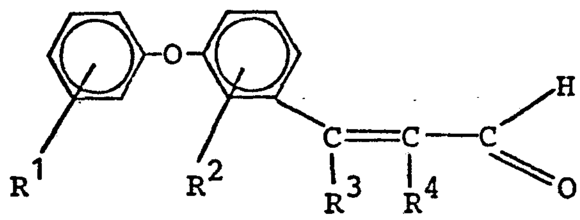

(V)

in Gegenwart einer mindestens äquimolaren Menge Alkalicyanid, gegebenenfalls in Gegenwart eines Katalysators umsetzt.

Zu a) Als funktionelle Derivate von Carbonsäuren der Formel (II) kommen z.B. Säurehalogenide, Säureanhydride oder auch Ester in Betracht. Die Reaktion wird im allgemeinen unter Verwendung von Verdünnungsmitteln durchgeführt. Als solche kommen praktisch alle inerten organischen Lösungsmittel in Frage.
Beispielsweise seien genannt:

aliphatische und aromatische, gegebenenfalls chlorierte Kohlenwasserstoffe, z.B. Pentan, Hexan, Heptan, Benzol, Toluol, Xylol, Methylenchlorid, Chloroform, Tetrachlorkohlenstoff, Chlorbenzol und Dichlorbenzol; Ether, wie z.B. Diethylether, Tetrahydrofuran und Dioxan, sowie Nitrile, wie z.B. Acetonitril und Propionitril.

Verwendet man als Ausgangsstoffe die Säurehalogenide (vorzugsweise die Säurechloride) der Formel (IV) so ist es zweckmäßig, einen Säureakzeptor zuzusetzen. Hierfür können die üblichen Säurebindemittel verwendet werden, beispielsweise Alkalicarbonate, wie Natrium- und Kaliumcarbonat; Alkalialkoholate, wie Natrium- und Kaliummethylat oder -ethylat, ferner aliphatische, aromatische oder heterocyclische Amine, wie Trimethyl- und Triethylamin, Dimethylanilin, Dimethylbenzylamin und Pyridin.

Zu b) Als Katalysatoren für die Variante b) des erfindungsgemäßen Verfahrens verwendet man im allgemeinen Verbindungen, die gewöhnlich bei Reaktionen im mehrphasigen Medium als

Hilfsmittel zum Phasentransfer von Reaktanden dienen. Insbesondere seien Tetraalkyl- und Trialkylarylammoniumsalze, wie z.B. Tetrabenzylammoniumchlorid, -bromid oder -jodid und Triethylbenzylammoniumchlorid genannt. Verwendbare Alkalicyanide sind z.B. Natrium- und Kaliumcyanid. Die Lösungsmittel sind die gleichen wie bei a); bei Arbeiten im Zweiphasensystem kann auch Wasser als Solvenskomponente zugegeben werden. Die Reaktionstemperatur kann in allen Fällen innerhalb eines größeren Bereichs variiert werden. Im allgemeinen arbeitet man zwischen 0 und 100°C, vorzugsweise zwischen 10 und 50°C. Die Reaktionen werden im allgemeinen bei Normaldruck durchgeführt.

Die Ausgangskomponenten werden im allgemeinen in äquimolaren Mengen eingesetzt. Ein Überschuß der einen oder anderen Komponente bringt keine wesentlichen Vorteile. Sie werden im allgemeinen in einem oder mehreren der angegebenen Verdünnungsmittel zusammengegeben und zur Vervollständigung der Reaktion mehrere Stunden gerührt. Anschließend wird mit Toluol/Wasser geschüttelt, die organische Phase abgetrennt, mit Wasser gewaschen und getrocknet. Nach Abdestillieren des Lösungsmittels im Vakuum fallen die neuen Verbindungen im allgemeinen in Form von Ölen an, die sich nicht unzersetzt destillieren lassen. Sie können jedoch durch sogenanntes "Andestillieren", d.h. durch längeres Erhitzen unter vermindertem Druck auf mäßig erhöhte Temperaturen von den letzten flüchtigen Bestandteilen befreit und auf diese Weise gereinigt werden. Zu ihrer Charakterisierung dient der Brechnungsindex.

Die als Ausgangsverbindungen zu verwendenden Carbonsäuren der Formel (II) bzw. ihre reaktionsfähigen Derivate wie Säurechloride oder Ester sind bekannt (vergl. DE-OS 1 926 433, 2 231 312, 2 365 555, 2 605 828, 2 738 150, 2 544 150 sowie 2 742 546).

Als Säurechloride seien z.B. außer den in den Beispielen

verwendeten folgende genannt:

2,2-Dimethyl-3-(2-phenylvinyl)-,
2,2-Dimethyl-3-(2-(4-chlorphenyl)vinyl)- und
2,2,3,3-Tetramethylcyclopropan-1-carbonsäurechlorid,
2,2-Dimethylspiro(2,4)hepta-4,6-dien-1-carbonsäurechlorid,
3,3-Dimethylspirocyclopropan-1,1'-inden-2-carbonsäurechlorid,
α-Isopropyl-4-trifluormethylphenylessigsäurechlorid,
α-Isopropyl-4-methoxyphenylessigsäurechlorid,
α-Isopropyl-4-trifluormethoxyphenylessigsäurechlorid,
α-Isopropyl-4-methylthiophenylessigsäurechlorid,
α-Isopropyl-4-trifluormethylthiophenylessigsäurechlorid
α-Isopropyl-3,4-methylendioxyphenylessigsäurechlorid.

Die erfindungsgemäßen Verbindungen haben eine ausgezeichnete Wirkung gegen saugende und beißende Insekten sowie gegen Arten aus der Ordnung Acarina. Bei Anwendung gegen pflanzenschädigende Insekten und Milben zeichnen sie sich außer durch Kontakt- und Fraßgiftwirkung auch durch gute Pflanzenverträglichkeit aus. Daneben sind sie auch gegen Vorratsschädlinge sowie gegen Arten aus der Gruppe der Hygieneschädlinge wirksam.

So können verschiedene Spinnmilbenarten, wie die Obstbaumspinnmilbe (Panonychus ulmi), die Citrusspinnmilbe (Panonychus citri) und die Bohnenspinnmilbe (Tetranychus urticae) gut bekämpft werden.

Viele schädliche Insekten mit saugenden und beißenden Mundwerkzeugen lassen sich mit den erfindungsgemäßen Verbindungen gleichfalls vernichten.

Genannt seien Käfer, wie der Maxikanische Bohnenkäfer (Epilachna varivestis), Kartoffelkäfer (Leptinotarsa decemlineata), Erdfloh-Käfer (Phyllotreta spp.), Erdbeerstengelstecher (Caenorrhinus germanicus), Erdbeerblütenstecher (Anthonomus rubi), Baumwollkapselkäfer (Anthonomus

BAD ORIGINAL

grandis), Drahtwürmer (Agriotes spec.), Schmetterlinge und deren Larven, wie der ägyptische und der altweltliche Baumwollkapselwurm (Earias insulana bzw. Heliothis armigera) Tabakknospenwurm (Heliothis virescens), Wickler, insbesondere Apfelwickler (Carpocapsa pomonella), Eichenwickler (Tortrix viridana), Frucktschalenwickler (Adoxophyes reticulana), Knospenwickler (Hedya nubifernana), Traubenwickler (Eupoecilia ambiguella), Maiszünsler (Ostrinia nubilalis), Erdraupen (Agrotis spec.), Frostspanner (Operophthera brumata), Nonne (Lymantria monacha), außerdem Fliegen, wie die Rübenfliege (Pegomya betae), Mittelmeerfrucktfliege (Ceratitis capitata) und Schaben wie die Deutsche Schabe (Blatta germanica) und die orientalische Schabe (Blatta orientalis) sowie Blattläuse wie die Schwarze Bohnenlaus (Doralis fabae), Grüne Pfirsichblattlaus (Myzus persicae) und Baumwollblattlaus (Aphis gossypii) und Wanzen, z.B. Baumwollwanzen (Oncopeltus fasciatus und Dysdercus spp.). Die Wirksamkeit der erfindungsgemäßen Verbindungen erstreckt sich auf alle oder einzelne Entwicklungsstadien normal sensibler und resistenter Arten.

Auch gegen Ektoparasiten bei Tieren sind die Verbindungen der Formel (I) ausgezeichnet wirksam. Sie besitzen sowohl eine gute Wirkung gegen permanent und temporär parasitierende Insekten als auch gegen Milben und insbesondere gegen Zecken.
Zu den tierischen Ektoparasiten aus der Klasse der Insekten, gegen die die Verbindungen der Formel (I) wirksam sind, gehören Läuse (Anoplura), Flöhe (Ceratophyllidae), Haar- und Federlinge (Mallophage), ferner Fliegen, wie Stechfliegen (Stomoxydidae) und Bremsen (Tabanidae), sowie solche Fliegen, deren Entwicklungsformen (Larven) als Schädlinge im Tierkörper parasitieren (Calliphoridae, Sarcophagidae, Gastrophilidae, Oestridae) und schließlich Lausfliegen (Hippoboscidae). Ektoparasiten aus der Ordnung der Milben (Acari) sind die Räudemilben (Sarcoptidae), Vogelmilben (Dermanyssidae), Lederzecken (Argasidae) und schließlich die Schildzecken (Ixodidae), darunter besonders die einwirtigen Rinder-

zecken Boophilus microplus und Boophilus decoloratus sowie die mehrwirtigen Arten der Gattungen Rhipicephalus, Amblyomma und Hyalomma.

Die erfindungsgemäßen Mittel enthalten die Wirkstoffe der Formel(I) im allgemeinen zu etwa 2 - 95 Gew.-%, vorzugsweise 5 - 90 Gew.-%. Sie können als Spritzpulver, emulgierbare Konzentrate, versprühbare Lösungen, Stäubemittel, Beizmittel, Dispersionen, Granulate oder Mikrogranulate in den üblichen Zubereitungen angewendet werden.

Spritzpulver sind in Wasser gleichmäßig dispergierbare Präparate, die neben dem Wirkstoff außer gegebenenfalls einem Verdünnungs- oder Inertstoff noch Netzmittel, z. B. polyoxethylierte Alkylphenole, polyoxethylierte Fettalkohole, Alkyl- oder Alkylphenyl-sulfonate und Dispergiermittel, z. B. ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Ihre Herstellung erfolgt in üblicher Weise, z. B. durch Mahlen und Vermischen der Komponenten.

Emulgierbare Konzentrate können z. B. durch Auflösen des Wirkstoffes in einem inerten organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt werden. Bei flüssigen Wirkstoffen kann der Lösungsmittelanteil auch ganz oder teilweise entfallen. Als Emulgatoren können beispielsweise verwendet werden:

Alkylarylsulfonsaure Calziumsalze wie Ca-dodecylbenzolsulfonat oder nichtionische Emulgatoren

0050859

wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyglykolether, Sorbitanfettsäureester, Polyoxethylen-sorbitan-fettsäureester oder Polyoxethylen-sorbitester.
Stäubemittel kann man durch Vermahlen des Wirkstoffes mit fein verteilten, festen Stoffen, z. B. Talkum, natürlichen Tonen, wie Kaolin, Bentonit, Pyrophyllit oder Diatomeenerde erhalten.

Granulate können entweder durch Verdüsen des Wirkstoffes auf adsorptionsfähiges, granuliertes Inertenmaterial hergestellt werden oder durch Aufbringen von Wirkstoffkonzentraten mittels Bindemitteln, z. B. Polyvinylalkohol, polyacrylsaurem Natrium oder auch Mineralölen auf die Oberfläche von Trägerstoffen, wie Sand, Kaolinite, oder von granuliertem Inertmaterial. Auch können geeigenete Wirkstoffe in der für die Herstellung von Düngemittelgranalien üblichen Weise - gewünschtenfalls in Mischung mit Düngemitteln - granuliert werden.

In Spritzpulvern beträgt die Wirkstoffkonzentration z. B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 10 bis 80 Gew.-% betragen. Staubförmige Formulierungen enthalten meistens 5 bis 20 Gew.-% an Wirkstoff. Bei Granulaten hängt der Wirkstoffgehalt zum Teil davon ab, ob die wirksame Verbindung flüssig oder fest vorliegt und

welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel-, Füll- oder Trägerstoffe.

Zur Anwendung werden die in handelsüblicher Form vorliegenden Konzentrate gegebenenfalls in üblicher Weise verdünnt, z.B. bei Spritzpulver, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt. Die akarizide bzw. insektizide Wirkung läßt sich durch Zusatz von anderen Insektiziden und/oder Akariziden verbreitern und an gegebene Umstände anpassen. Als Zusätze eignen sich z.B. organische Phosphorverbindungen; Nitrophenole und deren Derivate; Formamidine; Harnstoffe; andere pyrethinartige Verbindungen sowie Carbamate und chlorierte Kohlenwasserstoffe.

Die Applikation der erfindungsgemäß zu verwendenden Wirkstoffe im Veterenärsektor erfolgt üblicherweise nach dem Spritz-, Sprüh-, Stäube- oder Badeverfahren, sowie im speziellen Fall der Zeckenmittel in sogenannten Dip- oder Sprayanlagen.

Mit besonderem Vorteil werden Verbindungen der Formel (I) mit Substanzen kombiniert, die einen synergistischen oder verstärkenden Effekt auf Pyrethroide ausüben. Beispiele solcher Verbindungen sind u.a. Piperonylbutoxid Propinyläther, Propinyloxime, Propinylcarbamate und Propinylphosphonate, 2-(3,4-Methylen-dioxiphenoxy)-3,6,9-

trioxaundecan, S,S,S-Tributylphosphorotrithioate, 1,2-Methylendioxi-4-[2-(octyl-sulfinyl)-propyl] benzol.

Die Erfindung wird durch die folgenden Beispiele näher erläutert:

Herstellungsbeispiele:

Beispiel 1:

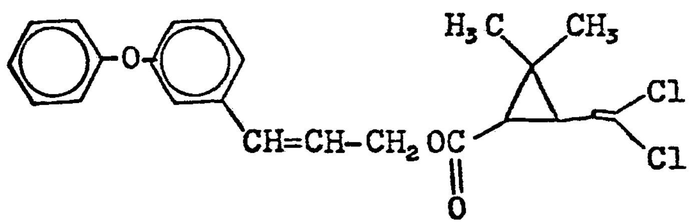

Eine Lösung von 9,1 g (0,04 Mol) 3-(2,2-Dichlorvinyl)-2,2-dimethylcyclopropan-1-carbonsäurechlorid (cis/trans-Verhältnis 50:50) in 40 ml Toluol wird bei 25°C tropfenweise mit einer Lösung aus 9,04 g (0,04 Mol) 3-Phenoxyzimtalkohol und 3,3 g Pyridin in 30 ml Toluol versetzt und weitere vier Stunden bei 25°C gerührt. Das Gemisch wird in 100 ml Wasser gegossen, die organische Phase abgetrennt und mit verdünnter Salzsäure sowie Wasser gewaschen. Anschließend wird die Toluol-Phase über Natriumsulfat getrocknet. Nach Entfernen des Lösungsmittels im Vakuum sowie kurzem Andestillieren bei 50°C/0,5 Torr, um letzte Lösungsmittelreste zu entfernen, erhält man 16,18 g (97 % der Theorie) 3-(2,2-Dichlorvinyl)-2,2-dimethylcyclopropan-1-carbonsäure-3-(3-phenoxyphenyl)-2-propen-1-ylester als hellgelbes Oel mit

dem Brechungsindex $n_D^{20}$=1,5850.

Beispiel 2:

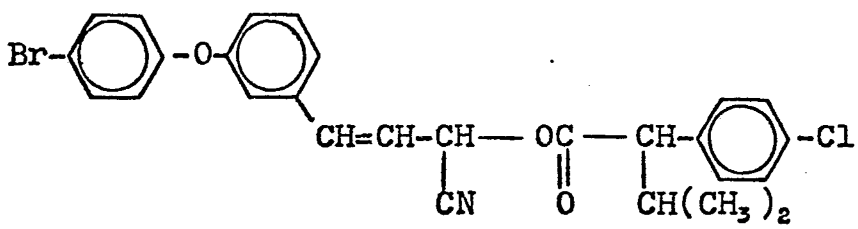

Eine Mischung aus 2,5 g Natriumcyanid, 2,5 ml Wasser, 50 ml n-Hexan und 0,2 g Tetrabutylammoniumjodid wird bei 25°C tropfenweise mit einer Lösung von 5,78 g (0,025 Mol) α-Isopropyl-4-chlorphenylessigsäurechlorid und 7,55 g (0,025 Mol) 3-(4-Bromphenoxy)zimtaldehyd versetzt und 5 Stunden bei 25°C gerührt. Anschließend wird die Reaktionsmischung mit 300 ml Toluol und 200 ml Wasser versetzt, 30 Minuten gerührt und die organische Phase abgetrennt. Man schüttelt die Toluol-Phase mit gesättigter Kochsalzlösung und trocknet über Natriumsulfat. Nach Entfernen des Lösungsmittels im Vakuum sowie kurzes Andestillieren bei 50°C/0,5 Torr erhält man 9,62 g (73 % der Theorie) 2-(4-Chlorphenyl) isovaleriansäure-3-[3-(4-bromphenoxy)phenyl]-2-propen-1-ylester. Brechungsindex $n_D^{21}$=1,5968.

Analog Beispiel 1 oder 2 können die Verbindungen der Formel (I)

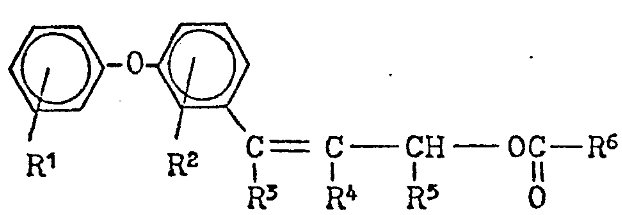 (I)

hergestellt werden.

| Beispiel | $R^1$ | $R^2$ | $R^3$ | $R^4$ | $R^5$ | $R^6$ | $n_D$ |
|---|---|---|---|---|---|---|---|
| 3 | H | H | H | H | CN | 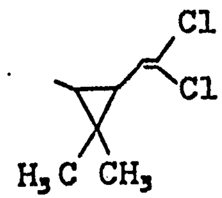 cis/trans= 50:50 | $n_D^{20}$=1,5839 |
| 4 | H | H | H | H | $C\equiv CH$ | " | $n_D^{24}$=1,5748 |
| 5 | H | H | H | H | $CH_3$ | " | $n_D^{21}$=1,5708 |
| 6 | 4-Br | H | H | H | H | " | $n_D^{22}$=1,5942 |
| 7 | 4-Br | H | H | H | CN | " | $n_D^{21}$=1,6039 |
| 8 | 4-Br | H | H | H | $C\equiv CH$ | " | |
| 9 | 4-Br | H | H | H | $CH_3$ | " | $n_D^{23}$=1,5878 |
| 10 | 4-Cl | H | H | H | H | " | $n_D^{21}$=1,5890 |
| 11 | 4-Cl | H | H | H | CN | " | |
| 12 | 4-Cl | H | H | H | $C\equiv CH$ | " | |
| 13 | 4-$CH_3$ | H | H | H | H | " | $n_D^{25}$=1,5768 |
| 14 | 4-$CH_3$ | H | H | H | CN | " | $n_D^{20}$= 1.5837 |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 15 | 4-$CH_3$ | H | H | H | C≡CH | (wie Bsp. 3) | |
| 16 | 4-F | H | H | H | H | " | $n_D^{26}$=1,5749 |
| 17 | 4-F | H | H | H | CN | " | |
| 18 | 4-F | H | H | H | C≡CH | " | |
| 19 | 4-$OCH_3$ | H | H | H | H | " | $n_D^{19}$=1,5818 |
| 20 | 4-$OCH_3$ | H | H | H | CN | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 21 | 3-Br | H | H | H | H | (wie Bsp. 3) | $n_D^{24}=1,5955$ |
| 22 | 3-Cl | H | H | H | H | " | $n_D^{23}=1,5899$ |
| 23 | 3-$CH_3$ | H | H | H | H | " | |
| 24 | 2-$CH_3$ | H | H | H | H | " | $n_D^{23}=1,5885$ |
| 25 | H | 4-$C(CH_3)_3$ | H | H | H | " | $n_D^{23}=1,5730$ |
| 26 | H | 4-$C(CH_3)_3$ | H | H | CN | " | |
| 27 | H | 4-$C(CH_3)_3$ | H | H | $C\equiv CH$ | " | |
| 28 | H | 4-F | H | H | H | " | |
| 29 | H | 4-F | H | H | CN | " | $n_D^{21}=1,5787$ |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 30 | H | 4-F | H | H | $C\equiv CH$ | (wie Bsp. 3) | |
| 31 | 4-Cl | $4-C(CH_3)_3$ | H | H | H | " | |
| 32 | 4-Cl | $4-C(CH_3)_3$ | H | H | CN | " | |
| 33 | 4-Cl | 4-F | H | H | H | " | $n_D^{24}=1,5750$ |
| 34 | 4-Cl | 4-F | H | H | CN | " | |
| 35 | $4-CH_3$ | 4-F | H | H | H | " | $n_D^{25}=1,5686$ |
| 36 | $4-CH_3$ | 4-F | H | H | CN | " | $n_D^{20}=$ 1.5828 |
| 37 | H | H | H | Br | H | " | |
| 38 | H | H | H | Br | CN | " | $n_D^{23}=1,5972$ |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 39 | H | H | H | Br | C≡CH | (wie Bsp. 3) | |
| 40 | H | H | H | Br | $CH_3$ | " | $n_D^{22}$ = 1.5805 |
| 41 | 4-Br | H | H | Br | H | " | |
| 42 | 4-Br | H | H | Br | CN | " | |
| 43 | 4-Br | H | H | Br | $CH_3$ | " | |
| 44 | H | H | H | $CH_3$ | H | " | $n_D^{20}$=1,5737 |
| 45 | H | H | H | $CH_3$ | CN | " | $n_D^{21}$=1,5681 |
| 46 | H | H | H | $CH_3$ | C≡CH | " | $n_D^{23}$=1,5808 |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 47 | 4-Br | H | H | $CH_3$ | H | (wie Bsp. 3) | $n_D^{24}=1,5832$ |
| 48 | 4-Br | H | H | $CH_3$ | CN | " | $n_D^{22}=1,5778$ |
| 49 | 4-Br | H | H | $CH_3$ | $C\equiv CH$ | " | |
| 50 | H | H | Br | $CH_3$ | H | " | |
| 51 | H | H | Br | $CH_3$ | CN | " | |
| 52 | 4-Br | H | Br | $CH_3$ | H | " | |
| 53 | 4-Br | H | Br | $CH_3$ | CN | " | |
| 54 | H | H | H | $C_2H_5$ | H | " | $n_D^{21}=1,5720$ |
| 55 | H | H | H | $C_2H_5$ | CN | " | $n_D^{20}=1,5768$ |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 56 | H | H | H | $C_2H_5$ | C≡CH | (wie Bsp. 3) | |
| 57 | 4-Br | H | H | $C_2H_5$ | H | " | |
| 58 | 4-Br | H | H | $C_2H_5$ | CN | " | $n_D^{23}$=1,5818 |
| 59 | H | H | H | $C_6H_5$ | H | " | |
| 60 | H | H | H | $C_6H_5$ | CN | " | |
| 61 | H | H | H | 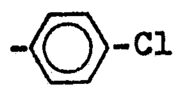 | H | " | |
| 62 | H | H | H | 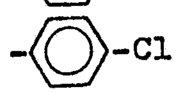 | CN | " | |
| 63 | H | H | Cl | H | H | " | |
| 64 | H | H | Cl | H | CN | " | $n_D^{23}$=1,5819 |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 65 | 4-Br | H | Cl | H | H | (wie Bsp. 3) | |
| 66 | 4-Br | H | Cl | H | CN | " | |
| 67 | H | H | H | H | H | 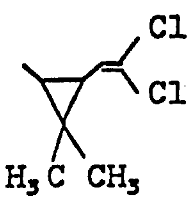 cis | |
| 68 | H | H | H | H | CN | " | $n_D^{25}$=1,5732 |
| 69 | H | H | H | H | C≡CH | " | $n_D^{20}$= 1,5789 |
| 70 | H | H | H | H | $CH_3$ | " | $n_D^{22}$= 1,5715 |
| 71 | H | H | H | $CH_3$ | H | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 72 | H | H | H | $CH_3$ | CN | 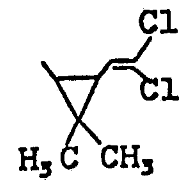 cis | $n_D^{25}$=1,5758 |
| 73 | H | H | Br | $CH_3$ | CN | " | |
| 74 | H | H | H | Br | CN | " | |
| 75 | H | H | H | H | H | 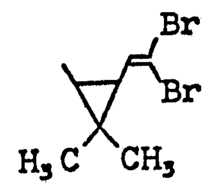 cis | $n_D^{25}$=1,5989 |
| 76 | H | H | H | H | CN | " | $n_D^{23}$=1,5973 |
| 77 | H | H | H | H | C≡CH | " | $n_D^{25}$=1,5953 |
| 78 | H | H | H | H | $CH_3$ | " | $n_D^{20}$=1,5906 |
| 79 | H | H | H | $CH_3$ | CN | " | $n_D^{20}$=1,5940 |
| 80 | H | H | H | $CH_3$ | C≡CH | " | $n_D^{23}$=1,5965 |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 81 | H | H | H | H | H | 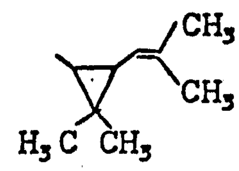 cis/trans= 50:50 | |
| 82 | H | H | H | H | CN | " | |
| 83 | H | H | H | H | C≡CH | " | $n_D^{25}$=1,5590 |
| 84 | H | H | H | $CH_3$ | CN | " | $n_D^{22}$=1,5610 |
| 85 | 4-F | H | H | H | H | " | $n_D^{26}$=1,5578 |
| 86 | H | H | H | H | H | 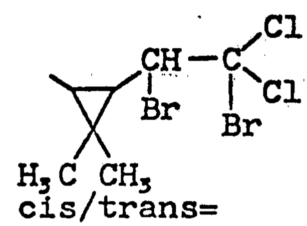 cis/trans= 50:50 | $n_D^{20}$=1,5990 |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 87 | H | H | H | H | CN | 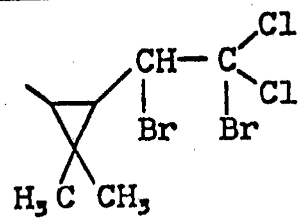 cis/trans= 50:50 | $n_D^{23}$=1,5929 |
| 88 | H | H | H | H | C≡CH | " | |
| 89 | H | H | H | H | $CH_3$ | " | |
| 90 | 4-Br | H | H | H | H | " | $n_D^{22}$=1,6050 |
| 91 | 4-Br | H | H | H | CN | " | $n_D^{22}$=1,6626 |
| 92 | H | H | H | $CH_3$ | H | " | |
| 93 | H | H | H | $CH_3$ | CN | " | $n_D^{22}$=1,5915 |
| 94 | 4-Br | H | H | $CH_3$ | H | " | |
| 95 | 4-Br | H | H | $CH_3$ | CN | " | |

<u>Fortsetzung Tabelle</u>

| Beispiel | $R^1$ | $R^2$ | $R^3$ | $R^4$ | $R^5$ | $R^6$ | $n_D$ |
|---|---|---|---|---|---|---|---|
| 96 | H | H | H | $C_2H_5$ | H | 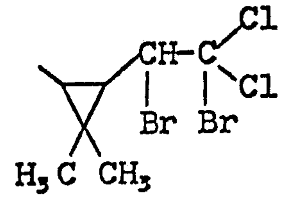 cis/trans= 50:50 | |
| 97 | H | H | H | $C_2H_5$ | CN | " | $n_D^{23}$=1,5840 |
| 98 | 4-Br | H | H | $C_2H_5$ | H | " | |
| 99 | 4-Br | H | H | $C_2H_5$ | CN | " | $n_D^{22}$=1,5950 |
| 100 | H | H | H | H | H | 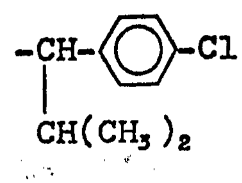 | $n_D^{20}$=1,5865 |
| 101 | H | H | H | H | CN | " | $n_D^{23}$=1,5798 |
| 102 | H | H | H | H | $C\equiv CH$ | " | $n_D^{26}$=1,5775 |
| 103 | H | H | H | H | $CH_3$ | " | $n_D^{21}$=1,5738 |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 104 | 4-Br | H | H | H | H | 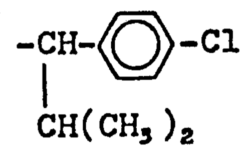 | $n_D^{22}$=1,5958 |
| 105 | 4-Br | H | H | H | C≡CH | " | |
| 106 | 4-Br | H | H | H | $CH_3$ | " | $n_D^{23}$=1,5788 |
| 107 | 4-Cl | H | H | H | H | " | $n_D^{21}$=1,5905 |
| 108 | 4-Cl | H | H | H | CN | " | |
| 109 | 4-Cl | H | H | H | C≡CH | " | |
| 110 | 4-$CH_3$ | H | H | H | H | " | $n_D^{26}$=1,5809 |
| 111 | 4-$CH_3$ | H | H | H | CN | " | $n_D^{20}$= 1.5823 |
| 112 | 4-$CH_3$ | H | H | H | C≡CH | " | |
| 113 | 4-F | H | H | H | H | " | $n_D^{26}$=1,5761 |
| 114 | 4-F | H | H | H | CN | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 115 | 4-F | H | H | H | C≡CH | 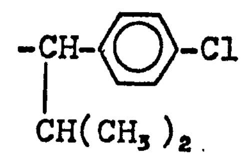 | |
| 116 | $4-OCH_3$ | H | H | H | H | " | $n_D^{20}$ =1,5843 |
| 117 | $4-OCH_3$ | H | H | H | CN | " | |
| 118 | 3-Br | H | H | H | H | " | $n_D^{24}$=1,5978 |
| 119 | 3-Cl | H | H | H | H | " | $n_D^{23}$=1,5913 |
| 120 | $3-CH_3$ | H | H | H | H | " | |
| 121 | $2-CH_3$ | H | H | H | H | " | $n_D^{23}$=1,5900 |
| 122 | H | $4-C(CH_3)_3$ | H | H | H | " | $n_D^{25}$=1,5732 |
| 123 | H | " | H | H | CN | " | |
| 124 | H | " | H | H | C≡CH | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 125 | H | 4-F | H | H | CN | 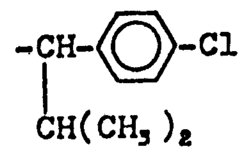 | $n_D^{21}$=1,5798 |
| 126 | H | 4-F | H | H | $CH_3$ | " | |
| 127 | H | 4-F | H | H | C≡CH | " | |
| 128 | 4-Cl | 4-$C(CH_3)_3$ | H | H | H | " | |
| 129 | 4-Cl | 4-$C(CH_3)_3$ | H | H | CN | " | |
| 130 | 4-Cl | 4-F | H | H | H | " | $n_D^{24}$=1,5770 |
| 131 | 4-Cl | 4-F | H | H | CN | " | |
| 132 | 4-$CH_3$ | 4-F | H | H | H | " | $n_D^{24}$=1,5714 |
| 133 | 4-$CH_3$ | 4-F | H | H | CN | " | |
| 134 | H | H | H | Br | H | " | $n_D^{23}$= 1.5929 |
| 135 | H | H | H | Br | CN | " | $n_D^{23}$= 1,5912 |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 136 | H | H | H | Br | $CH_3$ | 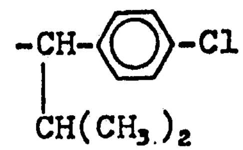 | $n_D^{22.5}$ = 1.5829 |
| 137 | 4-Br | H | H | Br | H | " | |
| 138 | 4-Br | H | H | Br | CN | " | |
| 139 | 4-Br | H | H | Br | $CH_3$ | " | |
| 140 | H | H | H | $CH_3$ | H | " | $n_D^{25}$=1,5705 |
| 141 | H | H | H | $CH_3$ | CN | " | $n_D^{22}$=1,5785 |
| 142 | H | H | H | $CH_3$ | $C\equiv CH$ | " | $n_D^{25}$=1,5814 |
| 143 | 4-Br | H | H | $CH_3$ | H | " | $n_D^{24}$=1,5789 |
| 144 | 4-Br | H | H | $CH_3$ | CN | " | $n_D^{24}$=1,5750 |
| 145 | 4-Br | H | H | $CH_3$ | $C\equiv CH$ | " | |
| 146 | H | H | Br | $CH_3$ | H | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 147 | H | H | Br | $CH_3$ | CN | 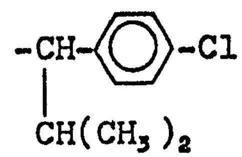 | |
| 148 | 4-Br | H | Br | $CH_3$ | H | " | |
| 149 | 4-Br | H | Br | $CH_3$ | CN | " | |
| 150 | H | H | H | $C_2H_5$ | H | " | $n_D^{24}=1,5702$ |
| 151 | H | H | H | $C_2H_5$ | CN | " | $n_D^{20}=1,5740$ |
| 152 | H | H | H | $C_2H_5$ | $C \equiv CH$ | " | |
| 153 | 4-Br | H | H | $C_2H_5$ | H | " | |
| 154 | 4-Br | H | H | $C_2H_5$ | CN | " | $n_D^{23}=1,5824$ |
| 155 | H | H | H | $C_6H_5$ | H | " | |
| 156 | H | H | H | $C_6H_5$ | CN | " | |
| 157 | H | H | H | 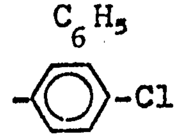 | H | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 158 | H | H | H | 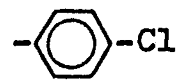 | CN | 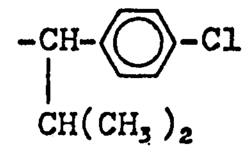 | |
| 159 | H | H | Cl | H | H | " | |
| 160 | H | H | Cl | H | CN | " | $n_D^{22}=1,5775$ |
| 161 | 4-Br | H | Cl | H | H | " | |
| 162 | 4-Br | H | Cl | H | CN | " | |
| 163 | H | H | H | H | H | 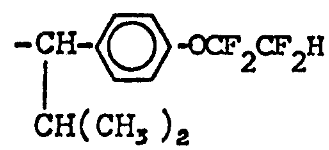 | $n_D^{25}=1,5305$ |
| 164 | H | H | H | H | CN | " | |
| 165 | H | H | H | $CH_3$ | CN | " | $n_D^{25}=1,5291$ |
| 166 | H | H | H | H | H | $-CH-C_6H_5$<br>$CH(CH_3)_2$ | $n_D^{20}=1,5825$ |

Fortsetzun Tabelle

| Beispiel | $R^1$ | $R^2$ | $R^3$ | $R^4$ | $R^5$ | $R^6$ | $n_D$ |
|---|---|---|---|---|---|---|---|
| 167 | H | H | H | H | CN | $-CH(C_6H_5)-CH(CH_3)_2$ | $n_D^{23}=1,5758$ |
| 168 | H | H | H | H | $C\equiv CH$ | " | |
| 169 | H | H | H | H | $CH_3$ | " | $n_D^{21}=1,5689$ |
| 170 | 4-Br | H | H | H | H | " | $n_D^{22}=1,5915$ |
| 171 | 4-Br | H | H | H | CN | " | $n_D^{22}=1,5884$ |
| 172 | 4-Br | H | H | H | $C\equiv CH$ | " | |
| 173 | 4-Br | H | H | H | $CH_3$ | " | |
| 174 | 4-Cl | H | H | H | H | " | $n_D^{20}=1,5868$ |
| 175 | 4-Cl | H | H | H | CN | " | |
| 176 | 4-Cl | H | H | H | $C\equiv CH$ | " | |
| 177 | $4-CH_3$ | H | H | H | H | " | $n_D^{23}=1,5778$ |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 178 | 4-$CH_3$ | H | H | H | CN | $-CH-C_6H_5$<br>\|<br>$CH(CH_3)_2$ | |
| 179 | 4-$CH_3$ | H | H | H | C≡CH | " | |
| 180 | 4-F | H | H | H | H | " | $n_D^{26}=1,5707$ |
| 181 | 4-F | H | H | H | CN | " | |
| 182 | 4-$OCH_3$ | H | H | H | H | " | $n_D^{19}=1,5798$ |
| 183 | 4-$OCH_3$ | H | H | H | CN | " | |
| 184 | 3-Br | H | H | H | H | " | $n_D^{24}=1,5932$ |
| 185 | 3-Cl | H | H | H | H | " | $n_D^{23}=1,5878$ |
| 186 | 3-$CH_3$ | H | H | H | H | " | |
| 187 | 2-$CH_3$ | H | H | H | H | " | $n_D^{23}=1,5819$ |
| 188 | H | 4-$C(CH_3)_3$ | H | H | H | " | $n_D^{25}=1,5682$ |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 189 | H | 4-$C(CH_3)_3$ | H | H | CN | $-CH(CH(CH_3)_2)-C_6H_5$ | |
| 190 | H | 4-$C(CH_3)_3$ | H | H | $C\equiv CH$ | " | |
| 191 | H | 4-F | H | H | H | " | |
| 192 | H | 4-F | H | H | CN | " | |
| 193 | H | 4-F | H | H | $C\equiv CH$ | " | |
| 194 | 4-Cl | 4-$C(CH_3)_3$ | H | H | H | " | |
| 195 | 4-Cl | 4-$C(CH_3)_3$ | H | H | CN | " | |
| 196 | 4-Cl | 4-F | H | H | H | " | |
| 197 | 4-Cl | 4-F | H | H | CN | " | |
| 198 | 4-$CH_3$ | 4-F | H | H | H | " | |
| 199 | 4-$CH_3$ | 4-F | H | H | CN | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 200 | H | H | H | Br | H | $-CH-C_6H_5$<br>\|<br>$CH(CH_3)_3$ | |
| 201 | H | H | H | Br | CN | " | $n_D^{22}$ = 1.5878 |
| 202 | H | H | H | Br | $CH_3$ | " | $n_D^{23}$ = 1.5785 |
| 203 | 4-Br | H | H | Br | H | " | |
| 204 | 4-Br | H | H | Br | CN | " | |
| 205 | 4-Br | H | H | Br | $CH_3$ | " | |
| 206 | H | H | H | $CH_3$ | H | " | $n_D^{25}$=1,5709 |
| 207 | H | H | H | $CH_3$ | CN | " | $n_D^{22}$=1,5740 |
| 208 | H | H | H | $CH_3$ | C≡CH | " | $n_D^{21}$=1,5769 |
| 209 | 4-Br | H | H | $CH_3$ | H | " | |
| 210 | 4-Br | H | H | $CH_3$ | CN | " | |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 211 | 4-Br | H | H | $CH_3$ | $C\equiv CH$ | $-CH-C_6H_5$<br>$CH(CH_3)_2$ | |
| 212 | H | H | Br | $CH_3$ | H | " | |
| 213 | H | H | Br | $CH_3$ | CN | " | |
| 214 | 4-Br | H | Br | $CH_3$ | H | " | |
| 215 | 4-Br | H | Br | $CH_3$ | CN | " | |
| 216 | H | H | H | $C_2H_5$ | H | " | |
| 217 | H | H | H | $C_2H_5$ | CN | " | $n_D^{25}=1,5680$ |
| 218 | H | H | H | $C_2H_5$ | $C\equiv CH$ | " | |
| 219 | 4-Br | H | H | $C_2H_5$ | H | " | |
| 220 | 4-Br | H | H | $C_2H_5$ | CN | " | $n_D^{23}=1,5779$ |

Fortsetzung Tabelle

| Beispiel | $R^1$ | $R^2$ | $R^3$ | $R^4$ | $R^5$ | $R^6$ | $n_D$ |
|---|---|---|---|---|---|---|---|
| 221 | H | H | H | $C_6H_5$ | H | 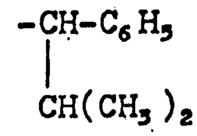 | |
| 222 | H | H | H | $C_6H_5$ | CN | " | |
| 223 | H | H | H | 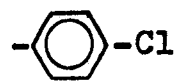 | H | " | |
| 224 | H | H | H | 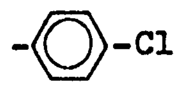 | CN | " | |
| 225 | H | H | Cl | H | H | " | |
| 226 | H | H | Cl | H | CN | " | |
| 227 | 4-Br | H | Cl | H | H | " | |
| 228 | 4-Br | H | Cl | H | CN | " | |
| 229 | H | $CF_3$ | H | H | H | (wie Beisp. 3) | |
| 230 | H | H | $CH_3$ | H | H | " | |
| 231 | H | H | CN | H | H | " | |
| 232 | H | H | H | Cl | H | " | |

FORMULIERUNGSBEISPIELE

Beispiel A:

Ein in Wasser leicht dispergierbares benetzbares Pulver wird erhalten, indem man

25 Gew.-Teile 3-(2,2-Dichlorvinyl)-2,2-dimethylcyclopropan-1-carbonsäure-3-(3-phenoxyphenyl)-2'-propen-1'-ylester als Wirkstoff,

64 Gew.-Teile kaolinhaltigen Quarz als Inertstoff,

10 Gew.-Teile ligninsulfonsaures Kalium und

1 Gew.-Teil oleylmethyltaurinsaures Natrium als Netz- und Dispergiermittel

mischt und in einer Stiftmühle mahlt.

Beispiel B:

Ein Stäubemittel, das sich zur Anwendung gut eignet, wird erhalten, indem man

10 Gew.-Teile 2-(4-Chlorphenyl)isovaleriansäure -3-(3-(4-bromphenoxy)phenyl)-2-propen-1-ylester als Wirkstoff und

90 Gew.-Teile Talkum als Inertstoff

mischt und in einer Schlagmühle zerkleinert.

Beispiel C:

Ein emulgierbares Konzentrat besteht aus

15 Gew.-Teilen 3-(2,2-Dichlorvinyl)-2,2-dimethylcyclopropan-1-carbonsäure-3-(3-phenoxyphenyl)-2-propen-1-ylester als Wirkstoff,

75 Gew.-Teilen Cyclohexanon als Lösungsmittel und

10 Gew.-Teilen oxäthyliertes Nonylphenol (10 AeO) als Emulgator.

Beispiel D:

Ein Granulat besteht z.B. aus etwa

2 - 15 Gew.-Teilen 2-(4-Chlorphenyl)isovalericensäure-3-(3-(4-bromphenoxy)phenyl)-2-propen-1-ylester als Wirkstoff

und einem inerten Granulatträgermaterial wie z.B. Attapulgit, Bimsgranulat und/oder Quarzsand.

Biologische Beispiele

Beispiel A

Diptera: Auf die Innenseiten des Deckels und des Bodens einer Petrischale wurden mittels einer Pipette 1 ml einer Lösung des Wirkstoffes (Beispiel 1) in Aceton, entsprechend einer Wirkstoffkonzentration von 0,05 % gleichmäßig aufgetragen und bis zur vollständigen Verdunstung des Lösungsmittels die Schalen offen belassen. Danach wurden je 10 Stubenfliegen (Musca domestica) in die Schalen gesetzt und diese mit dem Deckel verschlossen. Die Auswertung nach 3 Stunden durch Zählung der abgetöteten Fliegen ergab eine 100 % Mortalität.

Gleichermaßen wirkten die Verbindungen folgender Beispiele: 3, 44, 45, 46, 48, 54, 58, 68, 76, 79, 87, 97, 99, 101, 154, 167.

Beispiel B

Blattarria: Analog der Methode bei Dipteren wurde bei den Versuchen mit Schaben im Bezug auf die Vorbehandlung der Petrischalen verfahren. Die Konzentration des Wirkstoffes (Beispiel 3) in Aceton betrug 0,05 %. Nach Antrocknen des Belages der Testsubstanzen wurden je Petrischale 10 Larven (L4) der Deutschen Schabe (Blatella germanica) eingesetzt, die Schalen mit dem Deckel verschlossen und nach 72 Stunden die toten Schaben ausgezählt. Es wurde eine 100 % Mortalität festgestellt.

Ebenso wirkten die Verbindungen: 54, 58, 68, 76, 79, 87, 101, 167.

Beispiel C

Lepidoptera: Blätter der Baumwolle (Gossypium spec.) wurden mit einer wäßrigen Suspension der Verbindung (Beispiel 3) gemäß einer Wirkstoffkonzentration von 0,025 % besprüht (≙ 600 l Spritzbrühe/ha) und ebenso behandelte Raupen (10 Stück, Stadium L 3 - 4) von Prodenia litura hinzugesetzt. Blätter und Raupen wurden zusammen in Beobachtungskäfigen gehalten und nach 2 Tagen die Mortalität der Tiere bestimmt. Sie betrug 100 %.

Eine gleiche Wirkung wiesen noch folgende Verbindungen auf: 1, 7, 44, 45, 46, 48, 55, 58, 68, 76, 79, 80, 86, 87, 97, 99, 101, 140, 141, 150, 167, 207.

Beispiel D

Coleoptera: Blätter der Bohne Phaseolus vulgaris wurden mit den Blattstielen in kleine mit Wasser gefüllte Glasfläschchen gesteckt und ihre Ober- sowie Unterseite mit einer wäßrigen Suspension der Verbindung (Beispiel 3) entsprechend einer Wirkstoffkonzentration von 0,025 % besprüht (≙ 600 l Sprühbrühe/ha). Ebenso wurden je 10 Larven (24) des Mexikanischen Bohnenkäfers (Epilachna varivestis) behandelt und nach dem Antrocknen des Sprühbelages die behandelten Larven zu den behandelten Blättern in offene Gefäße gesetzt. Die Auswertung der Wirksamkeit nach 2 Tagen ergab 100 % Mortalität.

Gleichermaßen waren folgende Verbindungen wirksam: 2, 7, 44, 45, 48, 54, 58, 68, 76, 79, 80, 87, 93, 97, 99,101, 140, 141, 142, 150, 167, 208.

Beispiel E

Mit Kundebohnenblattläusen (Aphis craccivora) stark besetzte Ackerbohnen (Vicia faba) wurden mit der wäßrigen Suspension eines Spritzpulverkonzentrates, die 0,025 Gew.-% des Wirkstoffes aus Beispiel 2 enthielt, bis zum Stadium des Abtropfens gespritzt. Nach Aufstellung der Pflanzen im Gewächshaus wurde 3 Tage nach der Behandlung eine 100 %ige Abtötung der Versuchstiere festgestellt.

Ebenso wirksam erwiesen sich die Verbindungen gemäß folgenden Beispielen:
3, 7, 45, 46, 54, 58, 76, 79, 80, 87, 97, 99, 100, 101, 141, 144, 150, 154, 167.

Beispiel F

Mit Obstbaumspinnmilben (Panonychus ulmi, resistenter Stamm) stark besetzte Pflanzen (Apfelbäumchen) wurden mit der wäßrigen Suspension eines Spritzpulverkonzentrates, die 0,1 Gew.-% des Wirkstoffes (Beispiel 3) enthielt, bis zum Stadium beginnenden Abtropfens gespritzt und im Gewächshaus aufgestellt.

Die akarizide Wirksamkeit wurde 8 Tage nach der Behandlung ermittelt und ergab für die Verbindungen aus den Beipielen 45, 76, 79, 87 und 101 100 % Mortalität.

Beispiel G

In vitro-Test an tropischen Rinderzecken (Boophilus microplus)

In folgender Versuchsanordnung ließ sich die Wirksamkeit der beanspruchten Verbindungen gegen Zecken nachweisen: Zur Herstellung einer geeigneten Wirkstoffzubereitung wurden die Wirkstoffe 10 %ig (G/V) in einer Mischung, bestehend aus Dimethylformamid (85 g), Nonylphenolpolyglykolether (3 g) und oxethyliertes Rizinusöl (7 g), gelöst und die so erhaltenen Emulsionskonzentrate mit Wasser auf die Prüfkonzentrationen verdünnt.

In diese Wirkstoffverdünnungen wurden jeweils zehn vollgesogene Weibchen der tropischen Zecke Boophilus microplus, für fünf Minuten eingetaucht. Die Zecken wurden anschließend auf Filterpapier getrocknet und dann zum Zwecke der Eiablage mit der Rückseite auf einer Klebefolie befestigt. Die Aufbewahrung der Zecken erfolgte im Wärmeschrank bei 28°C und einer Luftfeuchtigkeit von 90 %.

Zur Kontrolle wurden Zeckenweibchen lediglich in Wasser eingetaucht.
Zur Bewertung der Wirksamkeit wurde zwei Wochen nach der Behandlung die Hemmung der Eiablage herangezogen. Dabei besagen 100 %, daß keine, 0 %, daß alle Zecken Eier abgelegt haben.

Tabelle

Zeckentest

| Beispiel | Wirkstoffkonzentration in ppm | % Hemmung der Eiablage |
|---|---|---|
| 3 | 1 000 | 100 |
| 45 | 1 000 | 100 |
| 76 | 1 000 | 100 |
| 79 | 1 000 | 100 |

0050859
HOE 80/F 243

Patentansprüche:

1. Verbindungen der Formel

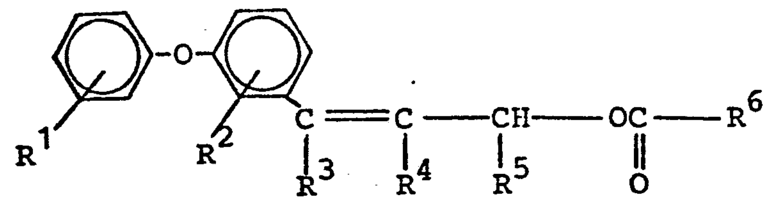

(I)

in welcher

$R^1$ Wasserstoff, Halogen, $(C_1-C_4)$Alkyl oder $(C_1-C_4)$Alkoxy,

$R^2$ Wasserstoff, Halogen, $(C_1-C_4)$Alkyl oder Trifluormethyl,

$R^3$ Wasserstoff, Halogen, Cyan oder $(C_1-C_4)$Alkyl,

$R^4$ Wasserstoff, Halogen, $(C_1-C_4)$Alkyl, Phenyl oder Halogenphenyl,

$R^5$ Wasserstoff, $(C_1-C_4)$Alkyl, $(C_2-C_3)$Alkinyl oder Cyan,

$R^6$ einen Rest der Formel

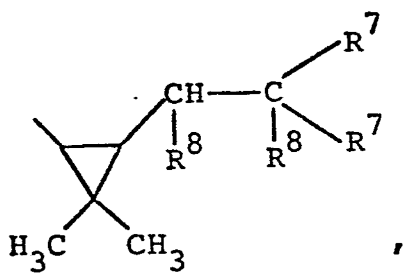

,

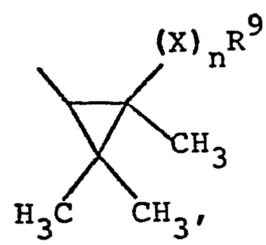

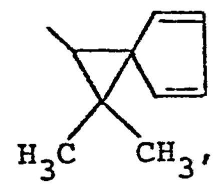

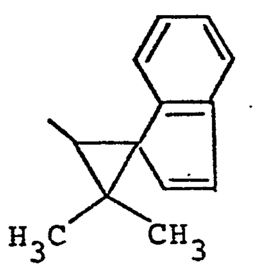

oder

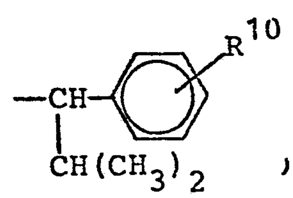

$R^7$ Halogen, $(C_1-C_4)$Alkyl, Phenyl oder Halogenphenyl,

$R^8$ Halogen oder beide $R^8$ zusammen eine weitere chemische Bindung,

$R^9$ $(C_1-C_4)$Alkyl, Phenyl oder Halogenphenyl,

$R^{10}$ Wasserstoff, Halogen, $(C_1-C_4)$Alkyl, $(C_1-C_4)$Alkoxy,

$(C_1-C_4)$Alkylthio, Halogen-$(C_1-C_4)$alkoxy, Halogen-$(C_1-C_4)$alkylthio oder Methylendioxy,

X Sauerstoff oder Schwefel sowie

n 0 oder 1 bedeuten.

2. Verbindungen der Formel I in Form ihrer optischen Enantiomeren bzw. ihrer Stereoisomeren.

3. Eine Verbindung der Formel

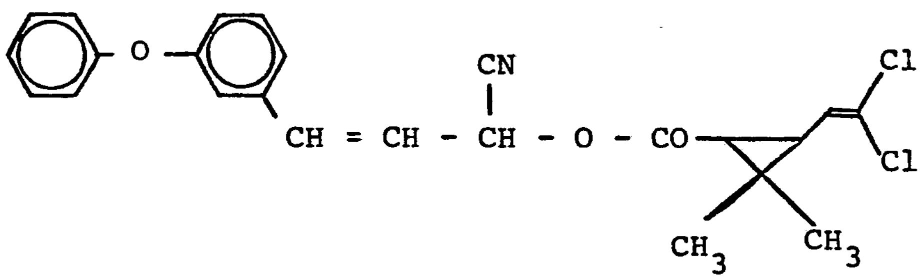

4. Eine Verbindung der Formel

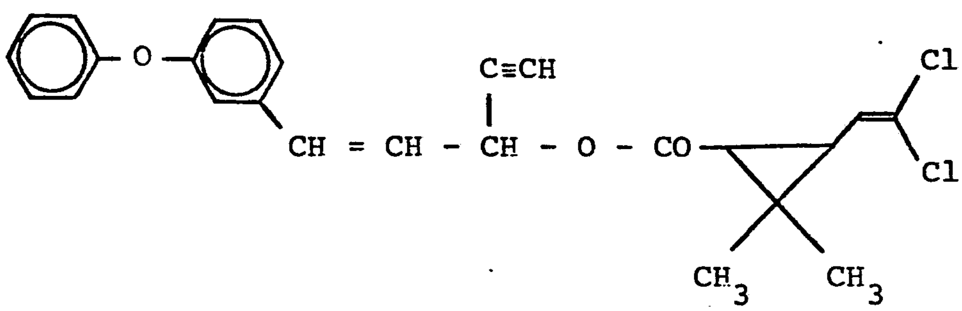

5. Eine Verbindung der Formel

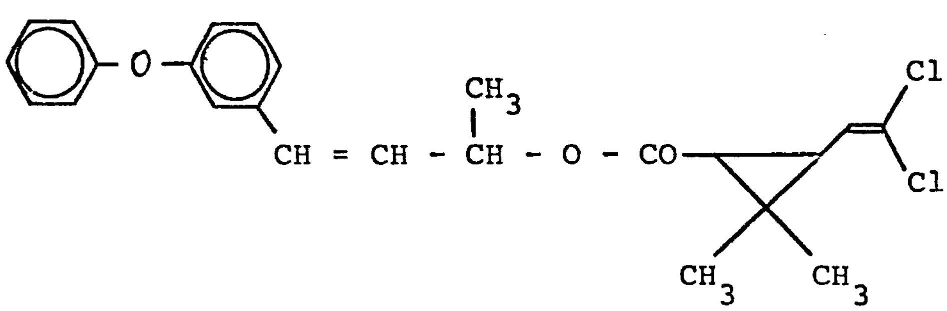

6. Eine Verbindung der Formel

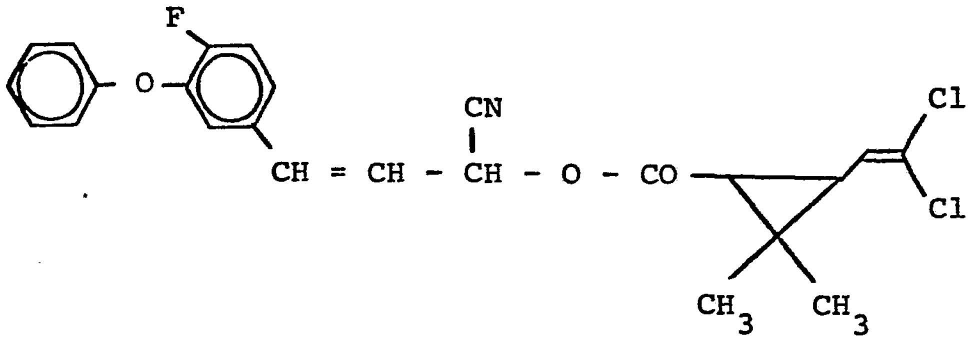

7. Eine Verbindung der Formel

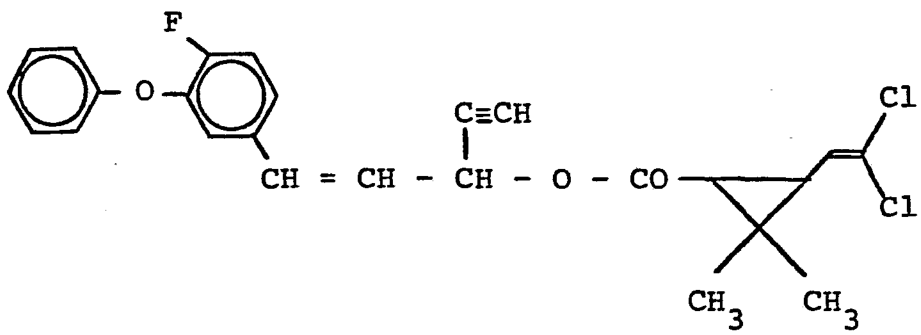

8. Eine Verbindung der Formel

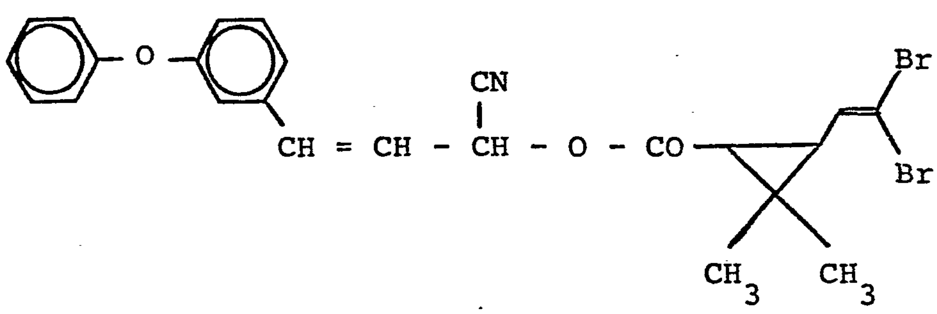

9. Eine Verbindung der Formel

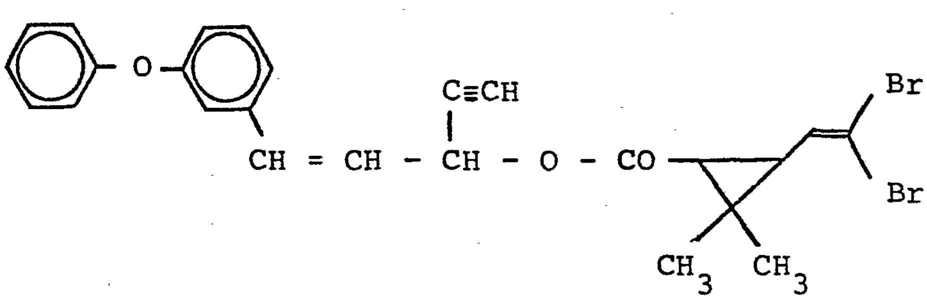

10. Eine Verbindung der Formel

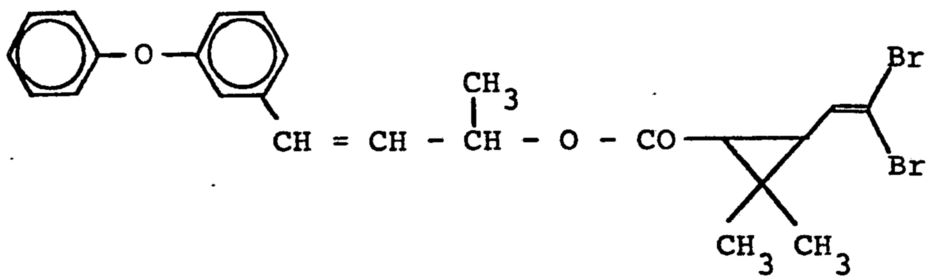

11. Eine Verbindung der Formel

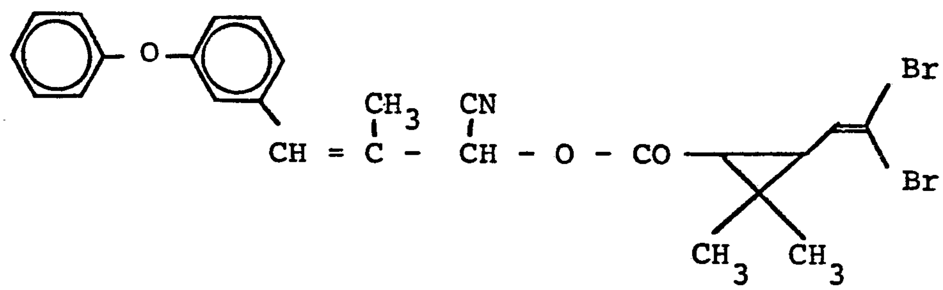

12. Eine Verbindung der Formel

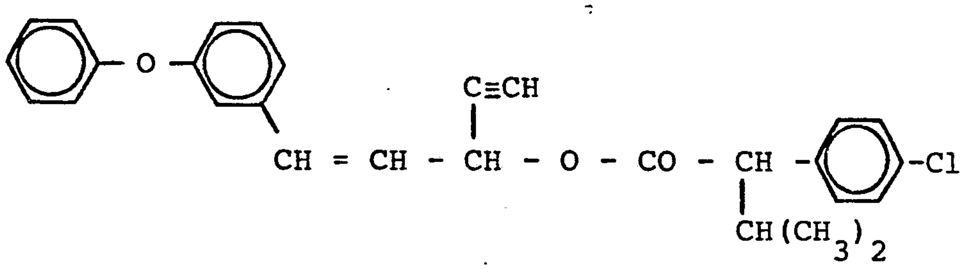

13. Verfahren zur Herstellung von Verbindungen der Formel I, dadurch gekennzeichnet, daß man

a) Carbonsäuren der Formel $R^6$-COOH (II) oder deren reaktionsfähige funktionelle Derivate mit Alkoholen der Formel

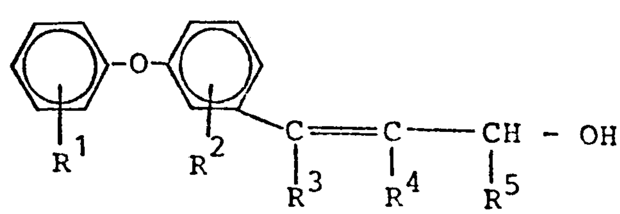 (III)

oder

b) Carbonsäurehalogenide der Formel $R^6$-CO-Hal (IV) mit Aldehyden der Formel

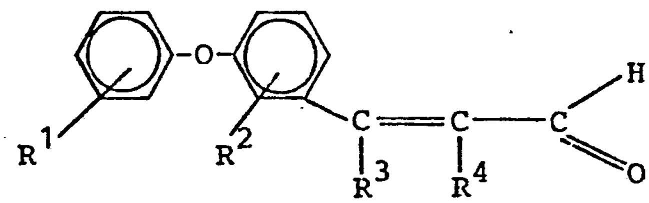

(V)

in Gegenwart einer mindestens äquimolaren Menge Alkalicyanid, gegebenenfalls in Gegenwart eines Katalysators umsetzt.

14. Verwendung von Verbindungen der Formel I zur Bekämpfung von schädlichen Insekten und Akariden.

15. Insektizide und akarizide Mittel, gekennzeichnet durch einen Gehalt an einer oder mehrerer Verbindungen gemäß Anspruch 1 und 2.

16. Verfahren zur Bekämpfung von schädlichen Insekten und Akariden, dadurch gekennzeichnet, daß man diese bzw. die von ihnen befallenen Substrate mit einer Verbindung gemäß Anspruch 1 und 2 behandelt.

**Patentansprüche für Österreich:**

1. Verfahren zur Herstellung von Verbindungen der Formel

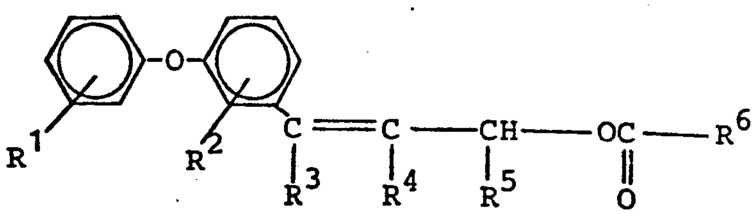

(I)

in welcher

$R^1$ Wasserstoff, Halogen, $(C_1-C_4)$Alkyl oder $(C_1-C_4)$Alkoxy,

$R^2$ Wasserstoff, Halogen, $(C_1-C_4)$Alkyl oder Trifluormethyl,

$R^3$ Wasserstoff, Halogen, Cyan oder $(C_1-C_4)$Alkyl,

$R^4$ Wasserstoff, Halogen, $(C_1-C_4)$Alkyl, Phenyl oder Halogenphenyl,

$R^5$ Wasserstoff, $(C_1-C_4)$Alkyl, $(C_2-C_3)$Alkinyl oder Cyan,

$R^6$ einen Rest der Formel

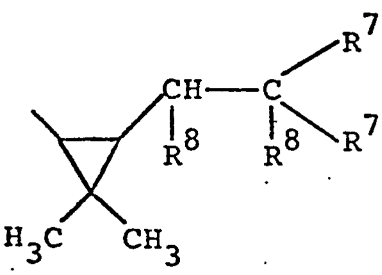

,

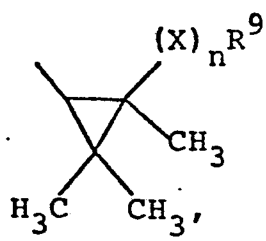

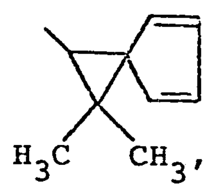

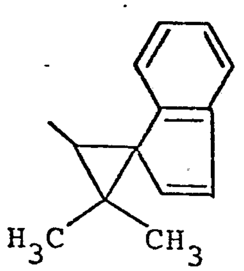

oder

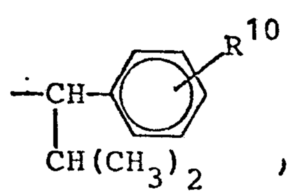

,

$R^7$ Halogen, $(C_1-C_4)$Alkyl, Phenyl oder Halogenphenyl,

$R^8$ Halogen oder beide $R^8$ zusammen eine weitere chemische Bindung,

$R^9$ $(C_1-C_4)$Alkyl, Phenyl oder Halogenphenyl,

$R^{10}$ Wasserstoff, Halogen, $(C_1-C_4)$Alkyl, $(C_1-C_4)$Alkoxy,

($C_1$-$C_4$)Alkylthio, Halogen-($C_1$-$C_4$)alkoxy, Halogen-($C_1$-$C_4$)alkylthio oder Methylendioxy,

X Sauerstoff oder Schwefel sowie

n 0 oder 1 bedeuten, einschließlich deren optischen Enantiomeren und Stereoisomeren, dadurch gekennzeichnet, daß man

a) Carbonsäuren der Formel $R^6$-COOH (II) oder deren reaktionsfähige funktionelle Derivate mit Alkoholen der Formel

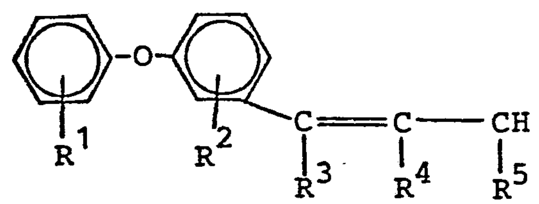

(III)

oder

b) Carbonsäurehalogenide der Formel $R^6$-CO-Hal (IV) mit Aldehyden der Formel

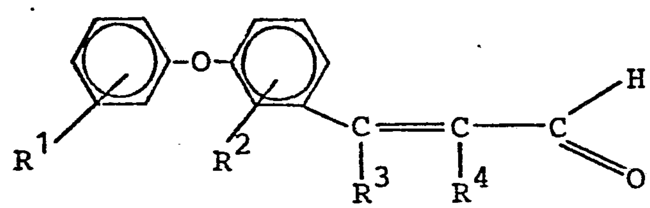

(V)

in Gegenwart einer mindestens äquimolaren Menge Alkalicyanid, gegebenenfalls in Gegenwart eines Katalysators umsetzt.

2. Verwendung von Verbindungen der Formel I zur Bekämpfung von schädlichen Insekten und Akariden.

3. Insektizide und akarizide Mittel, gekennzeichnet durch einen Gehalt an einer oder mehrerer Verbindungen gemäß Anspruch 1 und 2.

4. Mittel gemäß Anspruch 3, gekennzeichnet durch einen Gehalt an einer Verbindung der Formel

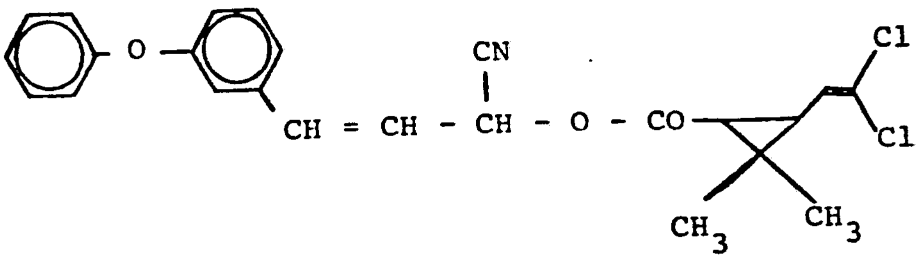

5. Mittel gemäß Anspruch 3, gekennzeichnet durch einen Gehalt an einer Verbindung der Formel

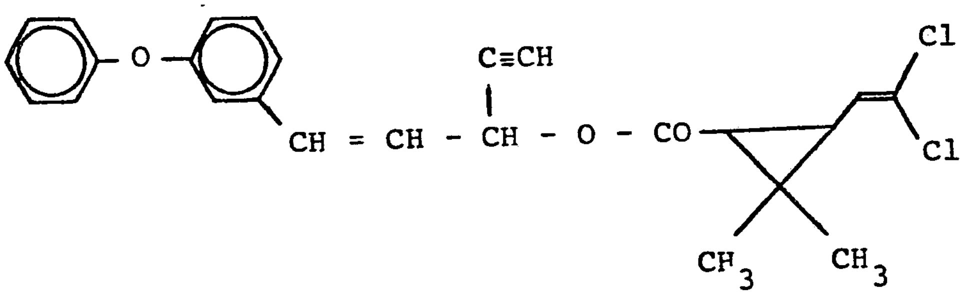

6. Mittel gemäß Anspruch 3, gekennzeichnet durch einen Gehalt an einer Verbindung der Formel

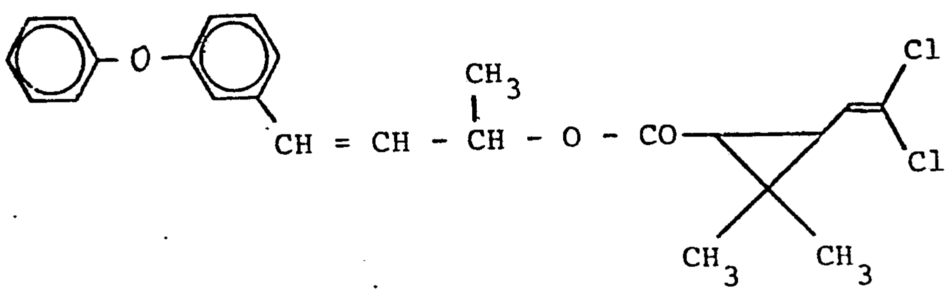

7. Mittel gemäß Anspruch 3, gekennzeichnet durch einen Gehalt an einer Verbindung der Formel

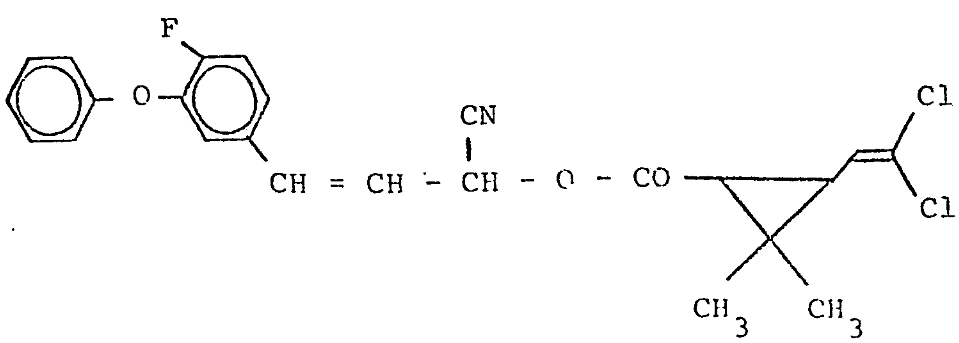

8. Mittel gemäß Anspruch 3, gekennzeichnet durch einen Gehalt an einer Verbindung der Formel

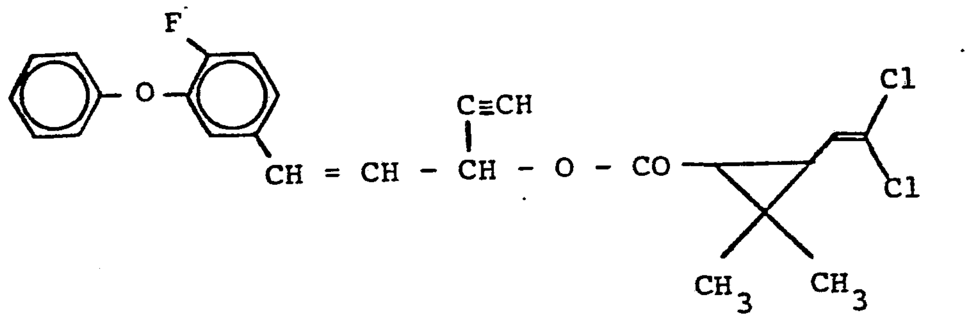

9. Mittel gemäß Anspruch 3, gekennzeichnet durch einen Gehalt an einer Verbindung der Formel

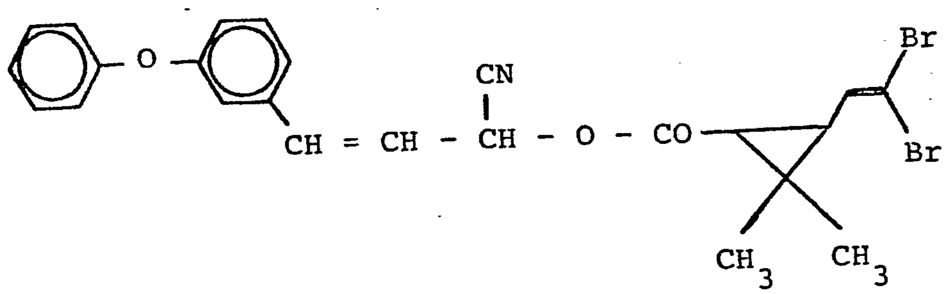

10. Mittel gemäß Anspruch 3, gekennzeichnet durch einen Gehalt an einer Verbindung der Formel

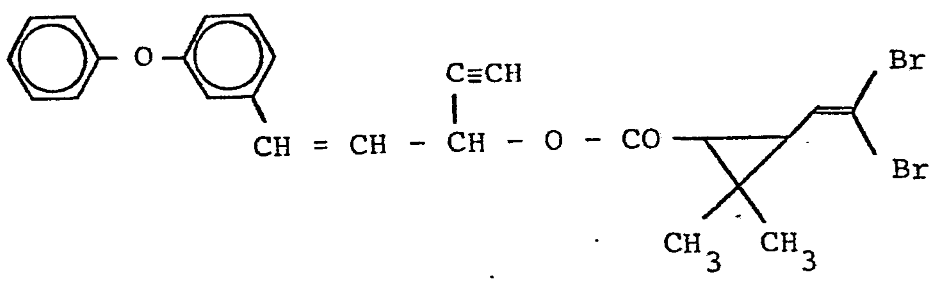

11. Mittel gemäß Anspruch 3, gekennzeichnet durch einen Gehalt an einer Verbindung der Formel

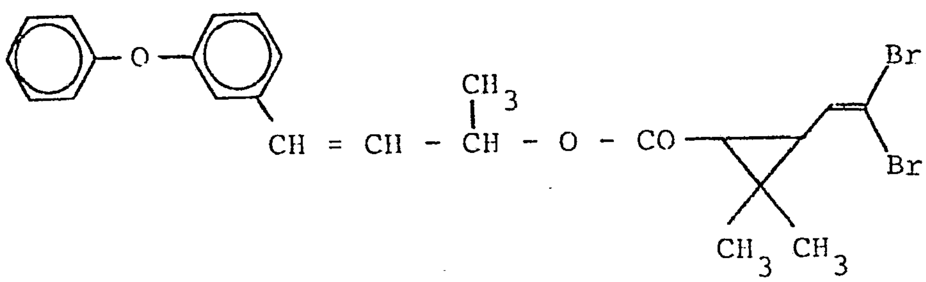

12. Mittel gemäß Anspruch 3, gekennzeichnet durch einen Gehalt an einer Verbindung der Formel

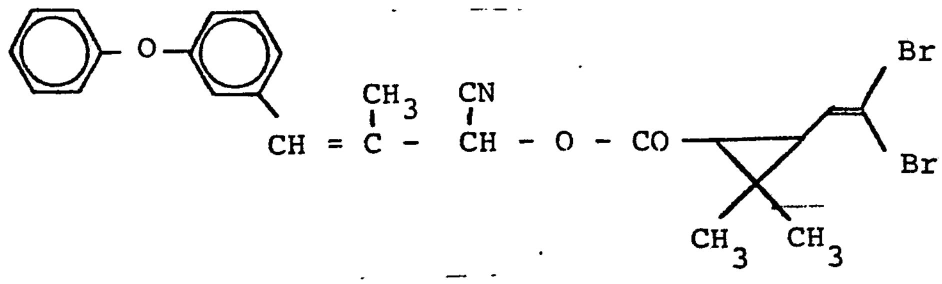

13. Mittel gemäß Anspruch 3, gekennzeichnet durch einen Gehalt an einer Verbindung der Formel

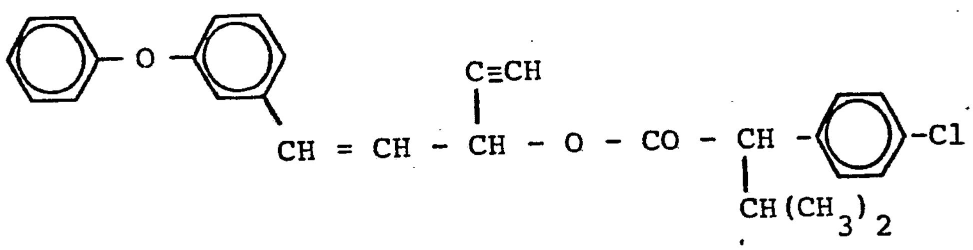

14. Verfahren zur Bekämpfung von schädlichen Insekten und Akariden, dadurch gekennzeichnet, daß man diese bzw. die von ihnen befallenen Substrate mit einer Verbindung gemäß Anspruch 1 und 2 behandelt.

0050859

Europäisches Patentamt

# EUROPÄISCHER RECHERCHENBERICHT

Nummer der Anmeldung

EP 81 10 8803

| EINSCHLÄGIGE DOKUMENTE | | | KLASSIFIKATION DER ANMELDUNG (Int Cl 3) |
|---|---|---|---|
| Kategorie | Kennzeichnung des Dokuments mit Angabe, soweit erforderlich, der maßgeblichen Teile | betrifft Anspruch | |
| D | DE - A - 2 925 315 (CIBA-GEIGY)<br>* Ansprüche *<br>---- | 1-16 | C 07 C 69/74<br>69/753<br>69/614<br>69/63<br>A 01 N 53/00 |

RECHERCHIERTE SACHGEBIETE (Int. Cl.3)

C 07 C 69/74
69/753
69/614
69/63

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 27-01-1982 | BERTE |

EPA form 1503.1 06.78